# EUROPÄISCHE PATENTANMELDUNG

(11) **EP 2 993 486 A1**
(43) Veröffentlichungstag der Anmeldung: **09.03.2016**
(21) Anmeldenummer: 15185234.0
(22) Anmeldetag: 09.03.2001
(51) Int. Cl.: G01S 7/48, G01S 7/481, G01S 17/42, G01C 15/00, G01C 3/08

(54) **ENTFERNUNGSMESSGERÄT**

(30) Priorität: 31.03.2000 DE 10016309
(62) Teilanmeldung aus: 01964693.4
(71) Anmelder: ROBERT BOSCH GMBH, 70442 Stuttgart (DE)
(72) Erfinder: Wolf, Peter, 70771 Leinfelden-Echterdingen (DE); Schmidt, Dierk, 71277 Rutesheim (DE); Luginsland, Juergen, 71111 Waldenbuch (DE); Flinspach, Gunter, 71229 Leonberg (DE); Stierle, Joerg, 71111 Waldenbuch (DE)

(57) **Zusammenfassung**

Die Erfindung geht aus von einem Entfernungsmessgerät mit zumindest einer in einem Gehäuse (12) angeordneten Sendeeinheit (16) zum Aussenden eines Lichtmesssignals, insbesondere eines Laserstrahls, und zumindest einer Empfangseinheit (20, 22) zum Empfang eines an einem entfernten Objekt reflektierten Messsignal-Anteils und mit wenigstens einer Recheneinheit. Es wird vorgeschlagen, dass Lichtmesssignale der Sendeeinheit (16) in eine gewählte Richtung flexibel ausgesendet werden, indem die Signale mittels einer Stelleinheit (74) im Gehäuse (12) umgelenkt werden, wobei in dem Gehäuse (12) ein Sensor angeordnet ist, über den zumindest ein Aussendewinkel (24) des Lichtmesssignals zu wenigstens einem Vergleichswert erfassbar ist.

## Beschreibung

### Stand der Technik

Die Erfindung geht aus von einem Entfernungsmeßgerät nach dem Oberbegriff des Anspruchs 1.

Aus der DE 198 09 683 A1 ist ein gattungsbildendes Entfernungsmeßgerät bekannt, das zum Messen von Entfernungen ohne Stativ von Hand frei geführt werden kann. In der DE 198 09 683 A1 wird ein Zusatzgehäuse zur Halterung des Entfernungsmeßgeräts vorgeschlagen, in das das Entfernungsmeßgerät mit seinem Gehäuse eingeschoben und mit einem Stativ verbunden werden kann. Durch das Zusatzgehäuse kann auf einfache Weise ein Stativbetrieb des Entfernungsmeßgeräts ermöglicht werden.

Kann eine Strecke zwischen zwei Punkten nicht direkt gemessen werden, beispielsweise weil ein möglicher Reflexionspunkt durch einen Gegenstand verdeckt ist, ist bekannt, mit dem gattungsbildenden Entfernungsmeßgerät eine indirekte Längenmessung durchzuführen. Hierfür wird in einem ersten Schritt eine erste Ersatzstrecke zwischen einem Meßpunkt und einem Anfangspunkt der gesuchten Strecke gemessen, wobei die erste Ersatzstrecke in einem rechten Winkel zur gesuchten Strecke verlaufen muß. In einem zweiten Schritt wird eine zweite Ersatzstrecke zwischen dem Meßpunkt und einem Endpunkt der gesuchten Strecke gemessen. In einem dritten Schritt wird die gesuchte Strecke mit den zwei Ersatzstrecken und dem angenommenen rechten Winkel zwischen der ersten Ersatzstrecke und der gesuchten Strecke mit einer Recheneinheit im Entfernungsmeßgerät durch Anwendung des Satzes des Pythagoras berechnet.

### Vorteile der Erfindung

Die Erfindung geht aus von einem Entfernungsmeßgerät mit zumindest einer in einem Gehäuse angeordneten Sendeeinheit zum Aussenden eines Lichtmeßsignals, insbesondere eines Laserstrahls, und zumindest einer Empfangseinheit zum Empfang eines an einem entfernten Objekt reflektierten Meßsignal-Anteils und mit wenigstens einer Recheneinheit. Anstatt einem Laser können auch andere, dem Fachmann als sinnvoll erscheinende Lichtquellen verwendet werden, wie beispielsweise spezielle Dioden usw.

Es wird vorgeschlagen, daß im Gehäuse zumindest ein Sensor angeordnet ist, über den zumindest ein Aussendewinkel des Lichtmeßsignals zu wenigstens einem Vergleichswert erfaßbar ist. Durch den Sensor können bei einer indirekten Ermittlung einer Strecke durch zwei Ersatzstrecken eine Annahme eines rechten Winkels zwischen einer Ersatzstrecke und der gesuchten Strecke und dadurch bedingten Fehler vermieden werden. Durch die Winkelerfassung kann indirekt eine Strecke in einem beliebigen Dreieck ermittelt werden.

Ferner kann ein besonders kompaktes Entfernungsmeßgerät erreicht werden, mit dem mit und ohne Stativ vorteilhaft indirekt eine Strecke ermittelt werden kann. Mit einem oder mehreren erfaßten Schwenkwinkeln und Strecken können verschiedene, dem Fachmann als sinnvoll erscheinende Rechenoperationen in der Recheneinheit ausgeführt werden. Es können bestimmte Winkel und/oder Steigungen von Wänden, Böden, Decken usw., Strecken, Flächen und/oder verschiedene Volumina ermittelt werden, beispielsweise durch Multiplikation, Subtraktion, Integration, Anwendung des Cosinussatzes usw.

Ist zumindest die Sendeeinheit relativ zum Gehäuse um zumindest eine, vorzugsweise um zwei Achsen schwenkbar, können ohne Stativ gewünschte Aussendewinkel einfach und exakt erfaßt werden. Ein Ausgangsmeßpunkt kann einfach beibehalten werden, indem der Aussendewinkel verändert werden kann, ohne daß das Gehäuse des Entfernungsmeßgeräts bewegt werden muß. Um möglichst geringe Störungen von Lichtstrahlen aus der Umgebung zu erreichen, ist vorteilhaft die Empfangseinheit gemeinsam mit der Sendeeinheit schwenkbar gelagert.

Ein gewünschter Schwenkwinkel kann zwischen zwei oder mehreren gemessenen Strecken oder kann zu einer von außen fest vorgegebenen Richtung erfaßt werden, wodurch einzelne Messungen, ein dadurch bedingter Aufwand und Fehlerquellen vermieden werden können. Die Richtung kann von außen durch die Erdanziehungskraft, d.h. es kann über einen Sensor und eine auf ihn wirkende Schwerkraft ein Neigungswinkel erfaßt werden, und/oder die Richtung kann durch den Erdmagnetismus vorgeben sein, die über einen Sensor, insbesondere einen Kompaß, erfaßt und zu der ein Aussendewinkel ermittelt werden kann. Zur Berücksichtigung der Erdanziehungskraft und/oder des Erdmagnetismus können zahlreiche, dem Fachmann als sinnvoll erscheinende Sensoren verwendet werden.

Anstatt einen Schwenkwinkel der Sendeeinheit im Gehäuse zu erfassen, kann vorteilhaft auch über zumindest einen Sensor ein Schwenkwinkel des Gehäuses erfaßt werden. Die Sendeeinheit und die Empfangseinheit können fest im Gehäuse des Entfernungsmeßgeräts befestigt werden, und es kann eine besonders einfache und kostengünstige Konstruktion erreicht werden.

In einer weiten Ausgestaltung der Erfindung wird vorgeschlagen, daß das Gehäuse über eine Stativaufnahme um zumindest eine Achse schwenkbar mit einem Stativ verbindbar und über zumindest einen Sensor ein Schwenkwinkel des Gehäuse zum Stativ erfaßbar ist. Mit einem Stativ kann eine einfache Handhabung erreicht und insbesondere können Handhabungsfehler bzw. Meßfehler vermieden werden, und zwar insbesondere indem eine exakte Ausgangsposition zur Durchführung mehrerer Messungen einfach beibehalten werden kann.

Die Stativaufnahme und/oder ein Lagerbereich des Stativs kann durch verschiedene, dem Fachmann als sinnvoll erscheinende Gelenke schwenkbar ausgeführt sein, vorzugsweise insgesamt um zumindest zwei Achsen, beispielsweise über ein Kugelgelenk, ein Kardangelenk usw. Ist die Stativaufnahme im Gehäuse um zumindest eine Achse schwenkbar gelagert, kann ein Schwenkwinkel besonders konstruktiv einfach über einen Sensor erfaßt werden, beispielsweise über einen inkrementalen Sensor.

Ferner wird vorgeschlagen, daß nach Auswahl eines bestimmten Programms die Recheneinheit neben einem ersten Meßwert zumindest einen zweiten Meßwert erwartet, und zwar insbesondere einen Schwenkwinkel und eine zweite Strecke. Der Komfort kann gesteigert, Handhabungsfehler können vermieden und eine Meßzeit zum Ermitteln einer indirekten Strecke kann verkürzt werden. Wurde eine zweite Strecke gemessen, kann automatisch die indirekte Strecke berechnet und angezeigt werden. Um bestimmte Meßfunktionen zu ermöglichen, kann es jedoch sinnvoll sein, die Automatik, d.h. das Erwarten eines zweiten Meßwerts und/oder die automatische Ausgabe der indirekten Strecke deaktivierbar auszuführen, beispielsweise zur Bestimmung eines Winkels oder einer Steigung einer ersten Ebene zu einer zweiten Ebene usw.

Wird von der Recheneinheit die Lage einer Schwenkachse des Gehäuses und/oder der Sendeeinheit berücksichtigt, können Meßfehler vermieden werden. Geht die Recheneinheit bei einer direkten Entfernungsmessung beispielsweise von einer dem Bediener zugewandten Stirnseite als Ausgangspunkt aus, wird der Ausgangspunkt vorteilhaft automatisch nach einer Wahl eines bestimmten Programms zur indirekten Erfassung einer Strecke in einen Schnittpunkt von einer vom Lichtsignal gebildeten Geraden und einer oder mehreren Schwenkachsen verlegt. Ferner kann der Ausgangspunkt automatisch durch Aufsetzen des Gehäuses auf ein Stativ verändert werden.

In einer weiteren Ausgestaltung der Erfindung wird vorgeschlagen, daß nach einer Auswahl eines bestimmten Programms die Recheneinheit automatisch zumindest zwei gemessene Strekken addiert. Der Komfort kann gesteigert und insbesondere kann vorteilhaft eine sogenannte Umschlagsmessung einfach und schnell durchgeführt werden, welche eine Entfernungsmessung über große Distanzen, die einen Meßbereich des Entfernungsmeßgeräts überschreiten, erlaubt. Ein vorgegebener Schwenkwinkel zwischen den gemessenen Strecken beträgt dabei 180°. Grundsätzlich sind jedoch auch andere Schwenkwinkel zwischen den zu addierenden Strecken denkbar.

Um Meßfehler bzw. Bedienfehler zu vermeiden, ist vorteilhaft ein Schwenkwinkel zwischen den Strecken über zumindest eine Kontrollvorrichtung kontrollierbar. Die Kontrollvorrichtung kann mechanische Raststellungen aufweisen, die starr oder von einem Bediener verstellbar ausgeführt sein können. Ferner kann die Kontrollvorrichtung eine Anzeigevorrichtung aufweisen, über die ein eingestellter Schwenkwinkel ausgegeben werden kann.

Ist ein Aussendewinkel über eine Steuereinheit und eine elektrisch angetriebene Stelleinheit einstellbar, kann der Komfort gesteigert werden. Ferner kann durch die elektrisch angetriebene Stelleinheit eine besonders exakte Einstellung, insbesondere Winkeleinstellung erreicht werden. Die Stelleinheit kann beispielsweise einen Elektromotor oder einen Elektromagneten besitzen, der über ein Stellgetriebe mit einer schwenkbaren Sendeeinheit oder mit einer Stativaufnahme verbunden ist. Die Stelleinheit kann teilweise oder vollständig im Gehäuse des Entfernungsmeßgeräts oder im Stativ integriert sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Laserentfernungsmeßgerät schräg von oben bei der Montage auf einem Stativ,
- Fig. 2: das Laserentfernungsmeßgerät aus Fig. 1 schräg von unten,
- Fig. 3: das Laserentfernungsmeßgerät aus Fig. 1 direkt von unten,
- Fig. 4: das Laserentfernungsmeßgerät aus Fig 1 bei einem Meßvorgang zur indirekten Erfassung einer Strecke,
- Fig. 5: eine schematische Darstellung einer Umschlagsmessung,
- Fig. 6: einen vergrößert und schematisch dargestellten Schnitt durch eine Stativaufnahme,
- Fig. 7: eine Ansicht in Richtung VII in Fig. 6,
- Fig. 8: eine Variante nach Fig. 1 mit einer schwenkbaren Sende- und Empfangseinheit und
- Fig. 9: eine schematische Darstellung einer Stelleinheit zum Schwenken einer Sende- und Empfangseinheit aus Fig. 8.

### Beschreibung der Ausführungsbeispiele

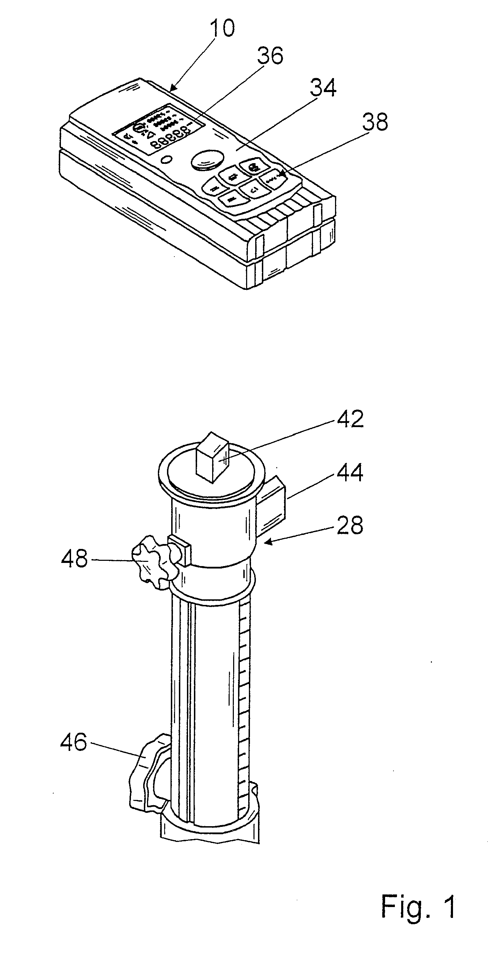

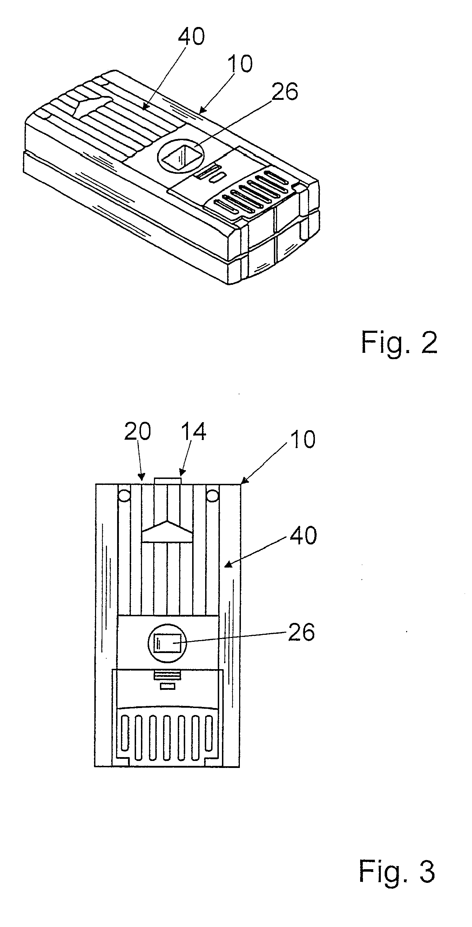

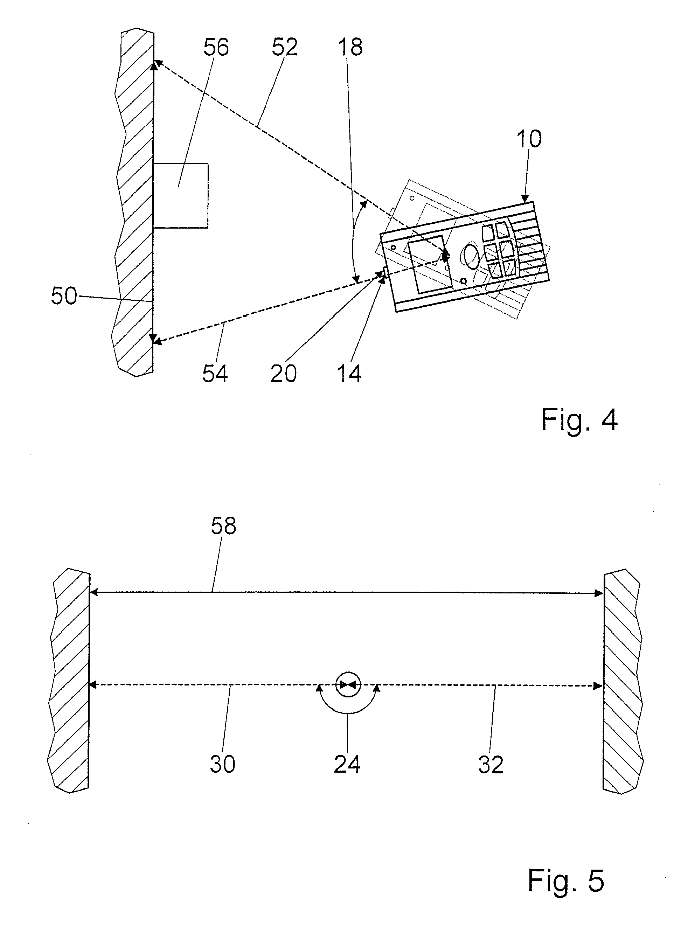

Fig. 1 zeigt ein Laserentfernungsmeßgerät mit einer im Gehäuse 10 angeordneten Sendeeinheit 14 zum Aussenden eines Lasermeßsignals (Fig. 3 und 4). Die Sendeeinheit 14 besitzt eine nicht näher dargestellte Laserdiode und eine Kollimationslinse, mit deren Hilfe das Meßsignal gebündelt durch einen Austrittskanal gelenkt werden kann.

Ferner besitzt das Laserentfernungsmeßgerät eine Empfangseinheit 20 mit einer nicht näher dargestellten Linse, die an einem Objekt reflektierte Meßsignal-Anteile einfängt und zu einem opto-elektronischen Wandler lenkt. Der Wandler, der vorzugsweise als Avalanche-Photodiode ausgebildet ist, empfängt die Meßsignal-Anteile und führt sie in elektrischer Form einer ebenfalls nicht näher dargestellten Recheneinheit bzw. Auswerteeinheit zu.

An einer Oberseite 34 des Laserentfernungsmeßgeräts befindet sich eine Anzeigevorrichtung 36 sowie mehrere Bedientasten 38 (Fig. 1). An einer Rückseite 40 des Laserentfernungsmeßgeräts ist im Gehäuse 10 eine Stativaufnahme 26 angeordnet (Fig. 2 und 3), die eine Ausnehmung mit einem rechteckigen Querschnitt aufweist, über die die Stativaufnahme 26 drehfest mit zwei der Ausnehmung entsprechend ausgeführten Bolzen 42, 44 eines Stativs 28 kuppelbar ist (Fig. 1).

Die Stativaufnahme 26 ist im Gehäuse 10 des Laserentfernungsmeßgeräts um eine Achse drehbar gelagert. Das Gehäuse 10 des Laserentfernungsmeßgeräts ist über die Stativaufnahme 26 um die Achse schwenkbar mit dem Stativ 28 verbindbar, und zwar kann das Laserentfernungsmeßgerät auf dem Bolzen 42 in einer horizontalen Ebene um 360° und auf dem Bolzen 44 in einer vertikalen Ebene um 360° geschwenkt werden. Über eine erste Schraube 46 können die Bolzen 42, 44 in der Höhe verstellt und mit einer zweiten Schraube 48 können die Bolzen 42, 44 und insbesondere der Bolzen 44 in einer horizontalen Ebene geschwenkt und anschließend festgestellt werden.

Erfindungsgemäß ist im Gehäuse 10, und zwar im Bereich einer Lagerstelle der Stativaufnahme 26, ein nicht näher dargestellter inkrementaler Winkelsensor angeordnet, über den ein Schwenkwinkel 18 des Gehäuses 10 zum Stativ 28 zwischen einer ersten gemessenen Ersatzstrecke 52 und einer zweiten gemessenen Ersatzstrecke 54 erfaßbar ist (Fig. 4). Eine aufgrund eines Gegenstands 56 nicht direkt erfaßbare Strecke 50 kann in einem beliebigen Dreieck durch die Messung der zwei Ersatzstrecken 52, 54 und dem Schwenkwinkel 24 zwischen den Ersatzstrecken 52, 54 über die Recheneinheit errechnet werden, und zwar unter Anwendung des Cosinussatzes. Meßfehler durch angenommene Gegebenheiten, die nicht exakt vorliegen, und durch Veränderung einer Ausgangsstellung können sicher vermieden werden.

Nach Auswahl eines Programms zur indirekten Ermittlung einer Strecke, erwartet die Recheneinheit neben einer ersten Ersatzstrecke 52 einen Schwenkwinkel 24 und eine zweite Ersatzstrecke 54. Ferner wird bei der Programmwahl ein Ausgangspunkt, von dem aus die Ersatzstrecken 52, 54 gemessen werden, von einer der Sendeeinheit 14 abgewandten Stirnseite des Gehäuses 10 in die Mitte der Stativaufnahme 26 verlegt. Der Ausgangspunkt liegt in einem Schnittpunkt der Schwenkachse und einer vom Lasermeßsignal gebildeten Geraden.

In einem weiteren, von einem Bediener wählbaren Programm werden zwei nacheinander gemessene Strecken 30, 32 durch die Recheneinheit automatisch addiert (Fig. 5). Das Programm kann besonders vorteilhaft für eine Umschlagsmessung genutzt werden, bei der eine Gesamtstrecke 58, die einen Meßbereich des Laserentfernungsmeßgeräts übersteigt, durch Messung von zwei Strecken 30, 32 und durch anschließende Addition ermittelt werden kann, wobei das Laserentfernungsmeßgerät zwischen der ersten und der zweiten Messung um einen Schwenkwinkel 24 von 180° geschwenkt wird (Fig. 5).

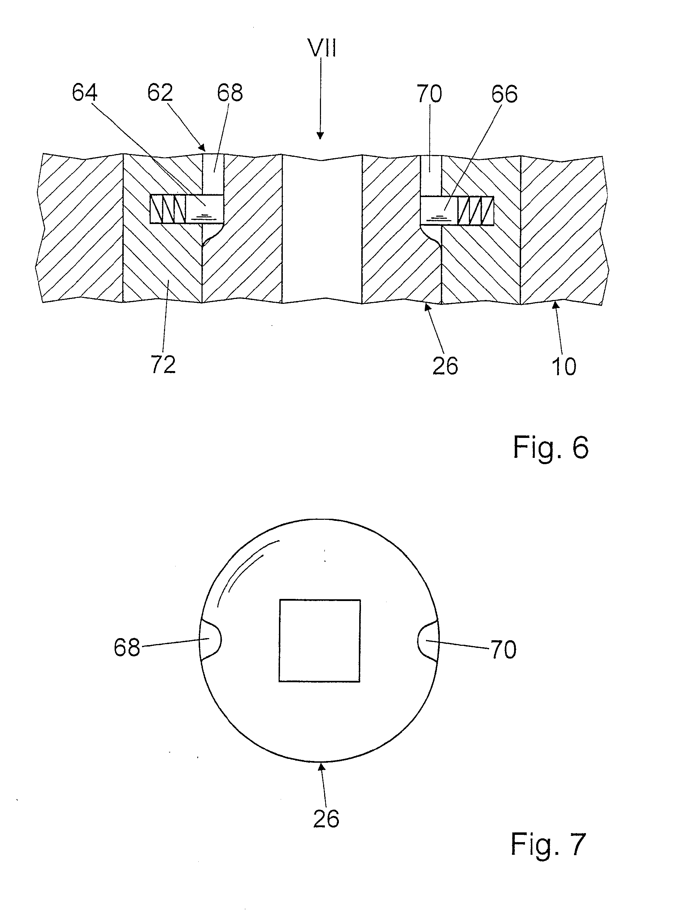

Der Schwenkwinkel 18 und insbesondere der Schwenkwinkel 24 von 180° des Gehäuses 10 ist über eine Kontrollvorrichtung 62 kontrollierbar, die zum einen in einem entsprechenden Programm stets den Schwenkwinkel 18, 24 des Gehäuses 10 zwischen einer ersten und einer zweiten Messung über die Anzeigevorrichtung 36 ausgibt und zwei um 180° über den Umfang der Stativaufnahme 26 versetzt angeordnete, in einem Rastring 74 gelagerte, federbelastete Rastelemente 64, 66 aufweist (Fig. 6 und 7). Die Rastelemente 64, 66 rasten in bestimmten Drehstellungen in Ausnehmungen 68, 70 der Stativaufnahme 26 ein. Um bei einer Umschlagsmessung eine erste Messung in eine gewünschte Richtung durchführen zu können, wird vorteilhaft das Gehäuse 10 über die Rastelemente 64, 66 eingerastet. Anschließend wird die Schraube 48 des Stativs gelöst, so daß das Gehäuse 10 gemeinsam mit dem Bolzen 42 in die gewünschte Richtung ausgerichtet werden kann. Ist die gewünschte Richtung für die erste Messung erreicht, wird der Bolzen 42 über die Schraube 48 in Drehrichtung fixiert. Nach einer ersten Messung kann das Gehäuse 10 über die Stativaufnahme 26 um 180° geschwenkt werden. Die Rastelemente 64, 66 werden dabei zuerst radial nach außen ausgelenkt und rasten anschließend nach einem Schwenkwinkel 24 von 180° wieder in die Ausnehmungen 68, 70 ein.

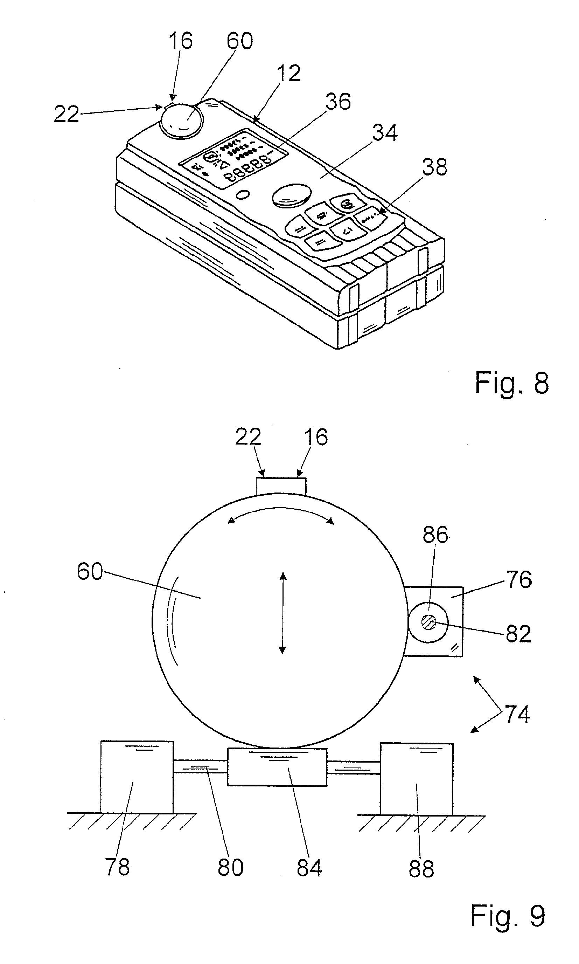

In Fig. 8 ist ein alternatives Laserentfernungsmeßgerät mit Gehäuse 12 und einer relativ zum Gehäuse 12 schwenkbaren Sende- und Empfangseinheit 16, 22 dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in Fig. 1 bis 7 verwiesen werden.

Die Sende- und Empfangseinheit 16, 22 sind in einem Kugelkopf 60 gelagert, der nach Auswahl eines bestimmten Programms über die vorhandenen Bedientasten 38, eine nicht näher dargestellte Steuereinheit und eine Stelleinheit 74 geschwenkt werden kann (Fig. 8 und 9). Die Stelleinheit 74 besitzt zwei Elektromotoren 76, 78, über die zwei senkrecht aufeinander stehende Wellen 80, 82 antreibbar sind. Die Wellen 80, 82 sind über Walzen 84, 86 mit dem Kugelkopf 60 verbunden und sind in den von den Elektromotoren 76, 78 abgewandten Enden in Lagerbauteilen 88 gelagert. In den Lagerbauteilen 88 sind nicht näher dargestellte Winkelsensoren angeordnet, über die Schwenkwinkel des Kugelkopfs 60 indirekt über die Wellen 80, 82 erfaßt werden können. Ein zwischen zwei Strecken gemessener Schwenkwinkel wird über die Anzeigevorrichtung 36 ausgegeben und kann dadurch überwacht werden.

Wird ein Programm für eine Umschlagsmessung gewählt, wird nach einer ersten Messung der Kugelkopf 60 über die Steuereinheit und die Stelleinheit 74 automatisch um 180° geschwenkt.

Neben der im Ausführungsbeispiel in Fig. 9 beschriebenen Stelleinheit 74 sind zahlreiche andere Stelleinheiten denkbar. Um die Lasermeßsignale sowie von der Empfangseinheit empfangene Meßsignal-Anteile in eine gewählte Richtung flexibel aussenden bzw. aus einer gewählten Richtung flexibel empfangen zu können, werden die Signale über eine nicht näher dargestellte Vorrichtung entsprechend umgelenkt. Die Vorrichtung besitzt die Signale leitende flexible Kabel, kann jedoch auch die Signale umlenkende, schwenkbare Spiegel und/oder Linsen aufweisen.

**Bezugszeichen**

| | | | |
|---|---|---|---|
| 10 | Gehäuse | 56 | Gegenstand |
| 12 | Gehäuse | 58 | Gesamtstrecke |
| 14 | Sendeeinheit | 60 | Kugelkopf |
| 16 | Sendeeinheit | 62 | Kontrollvorrichtung |
| 18 | Aussendewinkel | 64 | Rastelement |
| 20 | Empfangseinheit | 66 | Rastelement |
| 22 | Empfangseinheit | 68 | Ausnehmung |
| 24 | Aussendewinkel | 70 | Ausnehmung |
| 26 | Stativaufnahme | 72 | Rastring |
| 28 | Stativ | 74 | Stelleinheit |
| 30 | Strecke | 76 | Elektromotoren |
| 32 | Strecke | 78 | Elektromotoren |
| 34 | Oberseite | 80 | Welle |
| 36 | Anzeigevorrichtung | 82 | Welle |
| 38 | Bedientasten | 84 | Walze |
| 40 | Rückseite | 86 | Walze |
| 42 | Bolzen | 88 | Lagerbauteil |
| 44 | Bolzen | | |
| 46 | Schraube | | |
| 48 | Schraube | | |
| 50 | Strecke | | |
| 52 | Ersatzstrecke | | |
| 54 | Ersatzstrecke | | |

## Patentansprüche

1. Entfernungsmessgerät mit einem Gehäuse (12), mit zumindest einer in dem Gehäuse (12) angeordneten Sendeeinheit (16) zum Aussenden eines Lichtmesssignals, insbesondere eines Laserstrahls, und zumindest einer Empfangseinheit (20, 22) zum Empfang eines an einem entfernten Objekt reflektierten Messsignal-Anteils, sowie mit wenigstens einer Recheneinheit, **dadurch gekennzeichnet, dass** Lichtmesssignale der Sendeeinheit (16) in eine gewählte Richtung flexibel ausgesendet werden, indem die Signale mittels einer Stelleinheit (74) im Gehäuse (12) umgelenkt werden, wobei in dem Gehäuse (12) ein Sensor angeordnet ist, über den zumindest ein Aussendewinkel (24) des Lichtmesssignals zu wenigstens einem Vergleichswert erfassbar ist.

2. Entfernungsmessgerät nach einem der vorhergehenden Ansprüche, **dadurch gekennzeichnet, dass** die Stelleinheit (74) in Verbindung mit einer Steuereinheit elektrisch angetrieben und der Aussendewinkel des Lichtmesssignals einstellbar ist.

3. Entfernungsmessgerät nach einem der vorhergehenden Ansprüche, **dadurch gekennzeichnet, dass** zumindest die Sendeeinheit (16) in dem Gehäuse (12) relativ zum Gehäuse (12) um zumindest eine, vorzugsweise um zwei Achsen schwenkbar ist.

4. Entfernungsmessgerät nach einem der vorhergehenden Ansprüche, **dadurch gekennzeichnet, dass** die Stelleinheit (74) einen Elektromotor (76,78) oder einen Elektromagneten besitzt, der über ein Stellgetriebe mit der schwenkbaren Sendeeinheit (16) verbunden ist.

5. Entfernungsmessgerät nach einem der vorhergehenden Ansprüche, **dadurch gekennzeichnet, dass** die Empfangseinheit (20, 22) gemeinsam mit der Sendeeinheit schwenkbar gelagert ist.

6. Entfernungsmessgerät nach einem der vorhergehenden Ansprüche, **dadurch gekennzeichnet, dass** die Sendeeinheit (16) oder die Sendeeinheit (16) und die Empfangseinheit (20, 22) in einem Kugelkopf (60) gelagert ist/sind.

7. Entfernungsmessgerät nach Anspruch 7, **dadurch gekennzeichnet, dass** der Kugelkopf (60) über die Steuereinheit und die elektrische Stelleinheit (74) schwenkbar ist.

8. Entfernungsmessgerät nach Anspruch 6 oder 7, **dadurch gekennzeichnet, dass** die Stelleinheit (74) zwei Elektromotoren (76,78) besitzt, über die zwei senkrecht aufeinander stehende Wellen (80, 82) derart antreibbar sind, dass der über Walzen (84, 86) mit den Wellen (80, 82) verbundene Kugelkopf (60) bewegt wird.

9. Entfernungsmessgerät nach einem der vorhergehenden Ansprüche, **dadurch gekennzeichnet, dass** der Sensor einen Schwenkwinkel der Sendeeinheit (16) im Gehäuse (12) erfasst.

10. Entfernungsmessgerät nach einem der vorhergehenden Ansprüche, **dadurch gekennzeichnet, dass** ein Aussendewinkel zwischen zwei oder mehreren gemessenen Strecken (30, 32) oder zu einer von außen fest vorgegebenen Richtung erfasst wird.

11. Entfernungsmessgerät nach einem der vorhergehenden Ansprüche (9), **dadurch gekennzeichnet, dass** der Schwenkwinkel (24) zwischen den zwei oder mehreren Strecken (30,32) über zumindest eine Kontrollvorrichtung kontrollierbar ist.

12. Entfernungsmessgerät nach einem der vorhergehenden Ansprüche (9), **dadurch gekennzeichnet, dass** ein zwischen zwei Strecken (30, 32) gemessener Schwenkwinkel (24) über eine Anzeigevorrichtung (36) ausgegeben wird.
